# EUROPÄISCHE PATENTANMELDUNG

(11) **EP 4 850 980 A1**
(43) Veröffentlichungstag der Anmeldung: **09.12.2026**
(21) Anmeldenummer: 26172829.9
(22) Anmeldetag: 16.04.2026
(51) Int. Cl.: B60P 1/44, B60P 3/06, B60J 5/10

(54) **KOFFERAUFBAU MIT UMSCHLOSSENER LADEPLATTFORM**

(30) Priorität: 23.04.2025 DE 202025102214 U
(71) Anmelder: Bischoff, Thomas, 76297 Stutensee (DE)
(72) Erfinder: Bischoff, Thomas, 76297 Stutensee (DE)
(74) Vertreter: Christ, Niko

(57) **Zusammenfassung**

Die Erfindung betrifft einen Kofferaufbau für ein mehrachsiges Fahrzeug, beispielsweise ein Reisemobil, der eine Umhausung und eine am Heck befestigte Ladeplattform umfasst. Erfindungsgemäß weist die Umhausung eine Heckklappe auf, die einen Rückenteil umfasst und über eine vertikale Schwenkachse mit der Rückwand der Umhausung verbunden ist. Der Vorteil dieser Konstruktion gegenüber dem Stand der Technik liegt darin, dass Ladung, wie etwa ein Motorrad, während der Fahrt auf der Ladeplattform verbleiben kann und durch das Schließen der seitlich schwenkenden Heckklappe im Inneren des Kofferaufbaus vor Wetter und unbefugtem Zugriff geschützt ist.

## Beschreibung

Die vorliegende Erfindung betrifft einen Kofferaufbau für ein mehrachsiges Fahrzeug, umfassend eine Umhausung, die über eine Hinterachse des Fahrzeugs hinausragt und mit einer im Wesentlichen senkrechten Rückwand abschließt, sowie eine an einem Heck des Fahrzeugs befestigte Ladeplattform.

Solche Kofferaufbauten sind bereits aus dem Stand der Technik ohne Weiteres bekannt und üblich. Ein einfacher Koffer mit einer Ladeplattform befindet sich auf vielen Transport-Lastwagen, welche für den Warentransport eingesetzt werden. Jedoch sind auch bei Spezialfahrzeugen, insbesondere Reisemobilen, Lösungen bekannt, bei denen eine Ladeplattform vorgesehen ist, die einen Teil des Bodens einer Garagenbox ausbilden und aus einer Verschlussposition nach unten gefahren werden können. Eine solche Garagenbox wird in aller Regel hinten an ein solches Fahrzeug außen angesetzt und ist nicht integriert.

Derartige Spezialfahrzeuge sind aus dem Camping- und Freizeitbereich bereits seit langem bekannt. So ist etwa eine Ladeplattformen in der europäischen Patentanmeldung EP 4 397 540 A1 beschrieben, bei der ein Verladen nebeneinander erfolgt, wobei die Ladeplattform für die Fahrt so verschwenkt wird, dass im angehobenen Zustand die Ladung in zwei Ebenen übereinander gelagert ist. Insbesondere eignet sich eine solche Ladeplattform für die Verladung von Motorrädern, welche jedoch bei dieser Lösung ungeschützt im Freien verbleiben.

Die EP 4 397 540 A1 sieht ebenfalls eine Ladeplattform vor, welche jedoch nach dem Anheben eingeklappt wird und nach deren Schließen von einer hinteren Deckelklappe des Kofferaufbaus verdeckt ist. Hier muss die Ladung nach dem Anheben von der Ladeplattform entfernt werden, ist dann aber geschützt.

Allerdings wird es als hilfreich angesehen, eine Kombination der beiden Lösungen zu realisieren, also eine Lösung, bei der die Ladung, etwa ein Motorrad, während der Fahrt nicht von der Ladeplattform entfernt werden muss, aber dennoch im Inneren des Kofferaufbaus vor Wetter und Zugriffen geschützt ist.

Vor diesem Hintergrund liegt der vorliegenden Erfindung die Aufgabe zu Grunde, einen solchen Kofferaufbau zu schaffen. Gelöst wird dies durch einen Kofferaufbau gemäß den Merkmalen des unabhängigen Anspruchs 1. Sinnvolle Ausgestaltungen können den sich anschließenden abhängigen Ansprüchen entnommen werden.

Insoweit vorgesehen ist ein Kofferaufbau für ein mehrachsiges Fahrzeug, umfassend eine Umhausung, die über eine Hinterachse des Fahrzeugs hinausragt und mit einer im Wesentlichen senkrechten Rückwand abschließt, sowie eine an einem Heck des Fahrzeugs befestigte Ladeplattform. Ein solcher Kofferaufbau ist erfindungsgemäß dadurch gekennzeichnet, dass die Umhausung eine Heckklappe aufweist, welche einen Rückenteil umfasst, wobei in einem geschlossenen Zustand der Heckklappe der Rückenteil im Wesentlichen senkrecht ist und wobei der Rückenteil der Heckklappe über eine vertikale Schwenkachse mit der Rückwand der Umhausung verbunden ist.

Die Umhausung besitzt also eine Heckklappe, welche in einem fahrbereiten, geschlossenen Zustand durch ein Verschwenken der Heckklappe um die Schwenkachse herum geöffnet werden kann. Die Heckklappe schwenkt dann entgegen der Fahrtrichtung zuerst nach hinten und dann nach oben, wobei sie idealerweise so weit nach oben geschwenkt werden kann, bis das Rückenteil, welches im geschlossenen Zustand vorzugsweise die Rückwand in einer gemeinsamen Ebene verlängert, um 180° verschwenkt flach an der Rückwand anliegt. Soweit ein Bodenteil vorgesehen ist, welches im geschlossenen Zustand die Ladeplattform untergriffen hat, steht dieses nun nach hinten von der Rückwand weg. Dadurch ist nun die Ladeplattform zugänglich und es kann Ladung darauf verstaut und im Inneren der Umhausung untergebracht werden. Bedarfsweise befindet sich die Ladeplattform dabei in einem im Inneren der Umhausung abgetrennten Bereich, über und um den herum der Rest des Kofferaufbaus anderweitig genutzt werden kann. Alternativ kann aber auch vorgesehen sein, dass die Ladeplattform sich in einem großen Innenraum des Kofferaufbaus befindet und eine Beladung desselben über die Ladeplattform erfolgt. Ebenfalls kann vorgesehen sein, dass unterhalb der Ladeplattform kein Bodenteil vorgesehen ist und der Heckbereich insoweit nach unten offen ist.

Letztlich ist es so ermöglicht, dass die Ladeplattform in einem geöffneten Zustand des Kofferaufbaus von außen zugänglich, aber in einem geschlossenen Zustand des Kofferaufbaus innerhalb der Umhausung aufgenommen und geschützt angeordnet ist.

In einer ersten Ausgestaltung kann hierbei zusätzlich vorgesehen sein, dass die Heckklappe Seitenwände umfasst, welche jeweils eine Seitenkante des Rückenteils mit einer benachbarten Seitenkante des Bodenteils verbinden. Hierdurch verschwenken auch Teile der Seitenwand der Umhausung mit aus dem Bereich um die Ladeplattform herum nach hinten, so dass ein besserer Zugang zu der Ladeplattform ermöglicht ist. Ein zusätzlicher Aufwand ist damit nicht verbunden. Zudem entsteht ein gefälliges Äußeres, weil von außen lediglich ein schmaler Spalt zwischen der Heckklappe und dem Rest der Umhausung wahrnehmbar ist.

Eine alternative Ausgestaltung kann vorsehen, dass die Umhausung Seitentüren umfasst, welche in einem geschlossenen Zustand der Heckklappe jeweils an einer Seitenkante des Rückenteils und einer benachbarten Seitenkante des Bodenteils anstoßen und an jeweils einer Seitenwand der Umhausung angelenkt sind. Diese Türen können zur Seite, idealerweise um zumindest 90°, vorzugsweise aber um 180°, aufgeklappt werden, so dass die gleiche Zugänglichkeit der Ladeplattform erreicht wird. Die Heckklappe umfasst in dieser Ausgestaltung keine Seitenwände, sondern nur Flächen, die sich quer zur Fahrtrichtung erstrecken.

Mit einigem Vorteil kann vorgesehen sein, dass die Heckklappe in dem geschlossenen Zustand und/oder in einem um 180° verschwenkten Zustand mit der Umhausung verriegelbar ist. Ein Zugriff kann dadurch im geschlossenen Zustand nur durch autorisierte Personen erfolgen, zudem ist die Heckklappe während der Fahrt gegen ein unbeabsichtigtes Öffnen gesichert. Eine Verriegelung auch in dem geöffneten Zustand sorgt dafür, dass die Heckklappe sich nicht unbeabsichtigt schließen kann und entsprechend auch nicht festgehalten werden muss, um Ladung zu verstauen.

Insbesondere kann es sinnvoll sein, wenn die Heckklappe mit einem Antrieb, vorzugsweise einem elektrischen, pneumatischen oder hydraulischen Antrieb, verstellbar oder von Hand beweglich und vorzugsweise gefedert ist. Gerade bei größeren Fahrzeugen kann die Konstruktion der Heckklappe schwer sein, so dass eine Unterstützung oder vollständig motorische Betätigung eine große Hilfe darstellt.

Auch die Ladeplattform kann derart beweglich sein, dass sie bis zu einer oberen Anschlagsposition vertikal verfahrbar, sowie wenigstens in der oberen Anschlagsposition bei geschlossener Heckklappe von der Umhausung umschlossen ist. Während die Ladeplattform unproblematisch feststehend ausgebildet sein kann und dann mithilfe von Auffahrschienen oder anderer Hebehilfen beladen werden kann, ist es besonders vorteilhaft, wenn sie motorisch, insbesondere elektrisch, pneumatisch oder hydraulisch, verfahren werden kann und somit als Vertikallift betreibbar ist.

Besonders vorteilhaft kann die Ladeplattform als Unterfahrschutz ausgebildet, vorzugsweise innerhalb der Umhausung bei geschlossener Heckklappe in eine Unterfahrschutzposition verfahrbar sein. Die gesetzlichen Vorschriften fordern, dass gerade größere Fahrzeuge einen Unterfahrschutz besitzen, welcher verhindert, dass bei einem Unfall auffahrende Fahrzeuge unter das vorausfahrende Fahrzeug geschoben werden, so dass schwere oder gar tödliche Verletzungen verhindert werden können. Die Ladeplattform selbst stellt einen metallischen Rahmen dar, welcher so konstruiert sein kann, dass die Ladeplattform selbst als Unterfahrschutz dienen kann. Gerade wenn kein Bodenteil vorgesehen ist, kann die Ladeplattform als solche das Bodenteil darstellen und den Laderaum nach unten abschließen.

Alternativ kann ein horizontal verfahrbarer Unterfahrschutz vorgesehen sein, welcher vor einem Absenken der Ladeplattform in Richtung der Hinterachse einziehbar ist. Ein solcher Unterfahrschutz wird nach einem Hochfahren der Ladeplattform, sofern diese höhenverstellbar ist, ausgefahren und verriegelt. Er stellt eine feste Anprallfläche dar, welche ebenfalls ein Unterfahren verhindern kann. Hierzu ist es nötig, dass der Unterfahrschutz je nach Basisfahrzeug und Ausstattung eine Höhe von 450 bis 500 mm über dem Boden bis zu einer Unterkante des Unterfahrschutzes aufweisen muss. Ebenfalls darf der Abstand vom Fahrzeugende zu einer hinteren Kante des Unterfahrschutzes 300 mm nicht überschreiten.

Schließlich kann vorgesehen sein, dass die Ladeplattform Zurr- und Aufnahmepunkte zur Befestigung von Ladung auf der Ladeplattform aufweist. Diese erlauben den Transport von losem und/oder festverbautem Ladegut auf der Ladeplattform, ohne dass dies während der Fahrt unkontrolliert in dem integrierten Garagen-/Laderaum des Kofferaufbaus beweglich ist.

Die vorstehend beschriebene Erfindung wird im Folgenden anhand eines Ausführungsbeispiels näher erläutert.

Es zeigen
- Figur 1: ein Fahrzeug, vereinfacht ohne Führerhaus dargestellt, mit einem geschlossenen Kofferaufbau und einer von dem Kofferaufbau umschlossenen Ladeplattform in einer Seitenansicht,
- Figur 2: das Fahrzeug gemäß Figur 1 mit geöffneten Seitentüren in einer Draufsicht,
- Figur 3: eine Variante des Fahrzeugs gemäß Figur 1 mit geöffneter Heckklappe mit Seitenwänden und zugänglicher Ladeplattform in einer Seitenansicht, sowie
- Figur 4: eine weitere Variante des Fahrzeugs gemäß Figur 1 mit geöffneter Heckklappe und abgesenkter Ladeplattform in einer Seitenansicht.

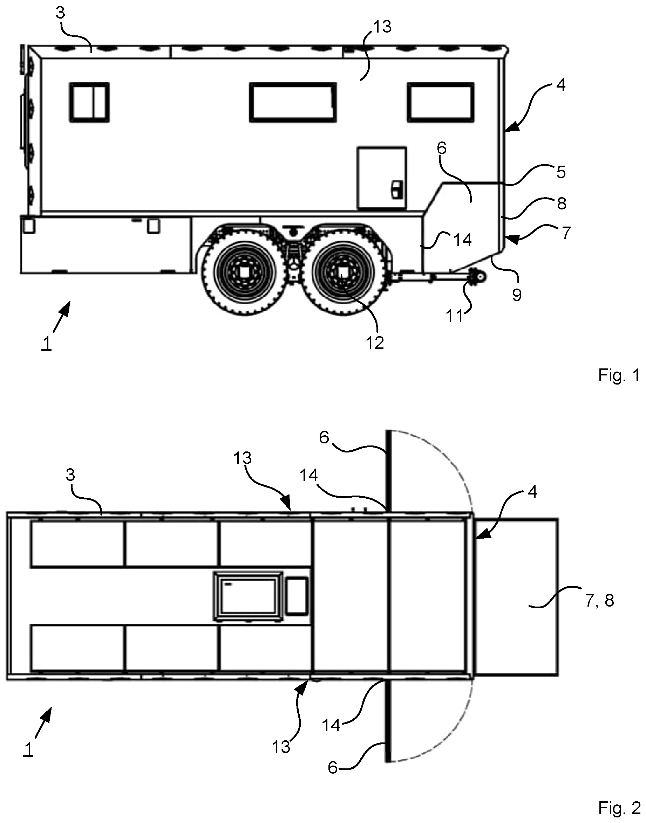

Figur 1 zeigt ein Fahrzeug 1, bei dem die Vorderachse und das Führerhaus zur Vereinfachung nicht dargestellt sind, das aber wahlweise auch als gezogener Anhänger ausgeführt sein kann. Solche Fahrzeuge finden zunehmend Verbreitung im Freizeitbereich, aber beispielsweise auch im Motorsport, wo es erforderlich ist, Ausrüstung und Personal auf engem Raum möglichst komfortabel mitzuführen. Während der größte Teil des Kofferaufbaus insoweit als Wohnbereich vorgesehen ist, kann ein Bereich im Boden des Hecks als Laderaum genutzt werden. Um teils schwere Lasten zu befördern, wie beispielsweise ein mitgeführtes Motorrad, ist eine Ladeplattform 2 sinnvoll, die in diesem Laderaum vorgesehen ist oder zu diesem benachbart liegt. Eine solche Ladeplattform 2 soll jedoch das äußere Bild des Fahrzeugs nicht oder nur möglichst wenig beeinflussen.

In Figur 1 ist eine Heckklappe 7 vorgesehen, welche an einer Rückwand 4 einer Umhausung 3 des Kofferaufbaus angelenkt ist. In einer ersten Ausgestaltung handelt es sich bei der Heckklappe 7 um eine flache Klappe, bestehend zunächst nur aus einem Rückenteil 8. Das Rückenteil 8 setzt die Rückwand 4 der Umhausung gerade fort und sorgt für ein einheitliches Bild im geschlossenen Zustand. Als Bodenteil fungiert in diesem Fall die hier nicht sichtbare Ladeplattform 2, welche den Laderaum nach unten abschließt. Die Ladeplattform 2 selbst und etwa auf dieser verzurrte Ladung ist im geschlossenen Zustand der Heckklappe 7 daher vor Zugriff und Wetter geschützt. Hierfür sorgen auch beiderseits vorgesehene Seitentüren 6, welche einen dreiseitigen Zugang zu der Ladeplattform 2 ermöglichen, und um eine Schwenkachse 14 um wenigstens 90° gegen die Fahrtrichtung weggeklappt werden können, wie in der Draufsicht gemäß Figur 2 dargestellt. Idealerweise können die Seitentüren 6 bis gegen die Seitenwände 13 geklappt und gegebenenfalls dort verriegelt oder durch eine Federung gehalten werden.

Unterhalb der Ladeplattform 2 ist ein Unterfahrschutz 11 vorgesehen, welcher verhindern soll, dass ein nachfolgendes Fahrzeug bei einem Auffahrunfall unter das vorausfahrende Fahrzeug geschoben wird und dadurch schwere Verletzungen für die Insassen des auffahrenden Fahrzeugs entstehen. Ein solcher Unterfahrschutz 11 ist vorgeschrieben und wird in der vorliegenden Ausgestaltung als separates Bauteil eingesetzt. Der gezeigte Unterfahrschutz 11 kann in Richtung einer Hinterachse 12 des Fahrzeugs 1 eingezogen werden, wie in Figur 2 gezeigt ist, so dass die Ladeplattform 2 bedarfsweise an dem Unterfahrschutz 11 vorbei herabgelassen werden kann.

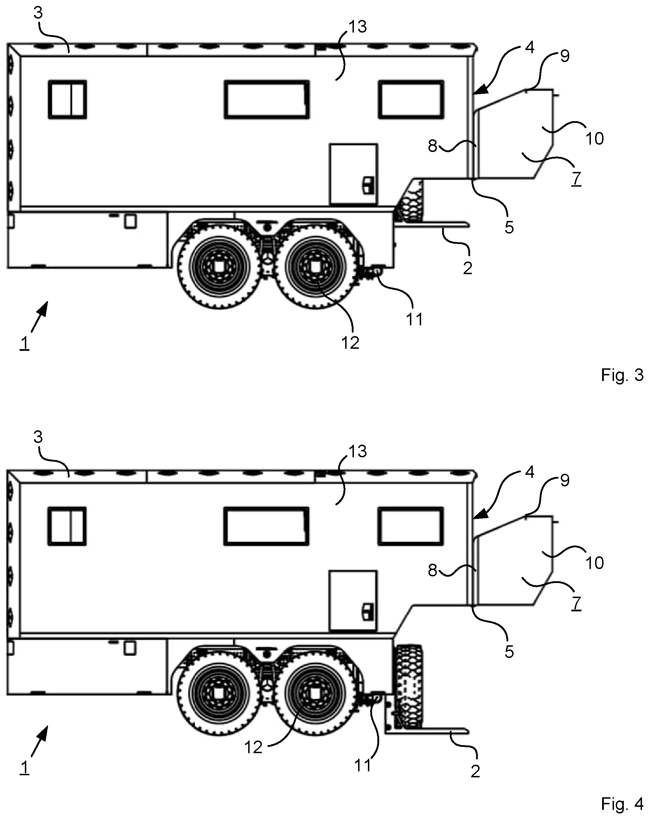

In der Darstellung der Figur 3 sieht die Heckklappe 7 keine Seitentüren 6 vor, sondern Seitenwände 10, welche die freien Kanten von einem nunmehr an der Heckklappe 7 angebrachten Bodenteil 9 und das benachbarte Rückenteil 8 miteinander verbinden. Das Bodenteil 9 ist einteilig und umfasst einen im geschlossenen Zustand waagrecht verlaufenden Abschnitt und einen über einen Knick schräg verlaufenden Abschnitt. Dies ist jedoch nach Bedarf anpassbar.

Insbesondere ist auch möglich, die Heckklappe 7 nach unten ausladender zu gestalten und die Ladeplattform 2, die in Figur 2 nun ebenfalls dargestellt ist, zu verstärken und ihrerseits als Unterfahrschutz 11 auszubilden. In einem solchen Fall wird die Ladeplattform 2 im geschlossenen Zustand der Heckklappe 7 so weit abgesenkt, dass sie an der gesetzlich vorgeschriebenen Position steht und dort gehalten, gegebenenfalls zusätzlich mechanisch gesichert. In diesem Fall handelt es sich um einen verdeckten Unterfahrschutz.

Figur 3 zeigt zunächst eine Ladeplattform 2, die in einer oberen Anschlagposition gehalten ist. Soweit es sich um eine fest installierte Ladeplattform 2 handelt, kann diese über Hebehilfen oder Rampen beladen werden, die an der Ladeplattform 2 angesetzt werden. Die Ladeplattform 2 kann aber auch, wie in Figur 4 gezeigt, motorisch, also elektrisch, pneumatisch oder hydraulisch, nach unten verfahren werden, so dass die Ladung bequem auf die abgesenkte Ladeplattform 2 gestellt und mit dem insoweit realisierten Vertikallift bewegt werden kann. Befindet sich die Ladeplattform 2 nach dem Laden wieder an der oberen Anschlagposition, wird die Heckklappe 7 wieder geschlossen und bedarfsweise verriegelt und der Unterfahrschutz 11 ausgefahren, wahlweise die Ladeplattform 2 in eine Unterfahrschutzposition verfahren, so dass das Fahrzeug 1 wieder fahrbereit ist.

Vorstehend beschrieben ist somit ein Kofferaufbau für ein mehrachsiges Fahrzeug, bei welchem die Ladung, etwa ein Motorrad, während der Fahrt nicht von der Ladeplattform entfernt werden muss, aber dennoch im Inneren des Kofferaufbaus vor Wetter und Zugriffen geschützt ist.

### BEZUGSZEICHENLISTE

- 1: Fahrzeug
- 2: Ladeplattform
- 3: Umhausung
- 4: Rückwand
- 5: Schwenkachse
- 6: Seitentür
- 7: Heckklappe
- 8: Rückenteil
- 9: Bodenteil
- 10: Seitenwand
- 11: Unterfahrschutz
- 12: Hinterachse
- 13: Seitenwand
- 14: Schwenkachse

## Patentansprüche

1. Kofferaufbau für ein mehrachsiges Fahrzeug (1), umfassend eine Umhausung (3), die über eine Hinterachse (12) des Fahrzeugs (1) hinausragt und mit einer im Wesentlichen senkrechten Rückwand abschließt, sowie eine an einem Heck des Fahrzeugs (1) befestigte Ladeplattform (2),
**dadurch gekennzeichnet, dass** die Umhausung (3) eine Heckklappe (7) aufweist, welche einen Rückenteil (8) umfasst, wobei in einem geschlossenen Zustand der Heckklappe (7) der Rückenteil (8) im Wesentlichen senkrecht ist und wobei der Rückenteil (8) der Heckklappe (7) über eine vertikale Schwenkachse (5) mit der Rückwand (4) der Umhausung (3) verbunden ist.

2. Kofferaufbau gemäß Anspruch 1, **dadurch gekennzeichnet, dass** die Heckklappe (7) bis zu einem Anschlag an der Rückwand, vorzugsweise um bis zu 180°, um die Schwenkachse (5) verschwenkbar ist.

3. Kofferaufbau gemäß einem der Ansprüche 1 oder 2, **dadurch gekennzeichnet, dass** die Heckklappe (7) auch einen Bodenteil (9) umfasst und die Ladeplattform (2) von dem Bodenteil (9) untergriffen ist.

4. Kofferaufbau gemäß Anspruch 3, **dadurch gekennzeichnet, dass** die Heckklappe (7) Seitenwände (10) umfasst, welche jeweils eine Seitenkante des Rückenteils (8) mit einer benachbarten Seitenkante des Bodenteils (9) verbinden.

5. Kofferaufbau gemäß Anspruch 3, **dadurch gekennzeichnet, dass** die Umhausung (3) Seitentüren (6) umfasst, welche in einem geschlossenen Zustand der Heckklappe (7) jeweils an einer Seitenkante des Rückenteils (8) und einer benachbarten Seitenkante des Bodenteils (9) anstoßen und an jeweils einer Seitenwand (13) der Umhausung (3) angelenkt sind.

6. Kofferaufbau gemäß einem der vorhergehenden Ansprüche, **dadurch gekennzeichnet, dass** die Heckklappe (7) in dem geschlossenen Zustand und/oder in einem um bis zu 180° verschwenkten Zustand mit der Umhausung (3) verriegelbar ist.

7. Kofferaufbau gemäß einem der vorhergehenden Ansprüche, **dadurch gekennzeichnet, dass** die Heckklappe (7) mit einem Antrieb, vorzugsweise einem elektrischen, pneumatischen oder hydraulischen Antrieb, verstellbar oder von Hand beweglich und vorzugsweise gefedert ist.

8. Kofferaufbau gemäß einem der vorhergehenden Ansprüche, **dadurch gekennzeichnet, dass** die Ladeplattform (2) bis zu einer oberen Anschlagsposition vertikal verfahrbar, sowie wenigstens in der oberen Anschlagsposition bei geschlossener Heckklappe (7) von der Umhausung (3) umschlossen ist.

9. Kofferaufbau gemäß einem der vorhergehenden Ansprüche, **dadurch gekennzeichnet, dass** die Ladeplattform (2) als Unterfahrschutz ausgebildet, vorzugsweise innerhalb der Umhausung (3) bei geschlossener Heckklappe (7) in eine Unterfahrschutzposition verfahrbar ist.

10. Kofferaufbau gemäß einem der Ansprüche 1 bis 7, **dadurch gekennzeichnet, dass** ein horizontal verfahrbarer Unterfahrschutz (11) vorgesehen ist, welcher vor einem Absenken der Ladeplattform (2) in Richtung der Hinterachse (12) einziehbar ist.

11. Kofferaufbau gemäß einem der vorhergehenden Ansprüche, **dadurch gekennzeichnet, dass** die Ladeplattform (2) Zurr- und Aufnahmepunkte zur Befestigung von Ladung auf der Ladeplattform (2) aufweist.

12. Fahrzeug mit einem Kofferaufbau gemäß einem der vorhergehenden Ansprüche.
